# EUROPEAN PATENT APPLICATION

(11) **EP 4 776 362 A1**
(43) Date of publication of application: **15.07.2026**
(21) Application number: 25864530.8
(22) Date of filing: 13.10.2025
(51) Int. Cl.: H01M 10/04, H01M 10/0587, H01M 50/586, H01M 4/66, H01M 4/76, H01M 50/213

(54) **CYLINDRICAL BATTERY CELL INCLUDING COMPOSITE CURRENT COLLECTOR**

(30) Priority: 30.10.2024 KR 20240150479
(71) Applicant: LG ENERGY SOLUTION, LTD., Seoul 07335 (KR)
(72) Inventor: PARK, Jieun, Daejeon 34122 (KR); CHOI, Eun Sun, Daejeon 34122 (KR)
(74) Representative: Goddar, Heinz J.
(86) International application number: PCT/KR2025/016008
(87) International publication number: WO 2026/095419

(57) **Abstract**

A cylindrical battery cell includes a battery case, and an electrode assembly including a first electrode and accommodated in the battery case. The first electrode includes a composite current collector including a positive electrode current collector and a negative electrode current collector facing the positive electrode current collector, a positive electrode active material layer formed on one surface of the positive electrode current collector to make up a positive electrode, and a negative electrode active material layer formed on one surface of the negative electrode current collector to make up a negative electrode.

## Description

### TECHNICAL FIELD

The present disclosure relates to a cylindrical battery cell including a composite current collector.

### BACKGROUND

Lithium secondary batteries are classified into several different types according to the shape of battery cases where electrode assemblies are accommodated. For example, cylindrical batteries include cylindrical shape battery cases, prismatic batteries include battery cases of metal can with a prismatic shape, and pouch-type batteries include pouch-shaped cases made of an aluminum laminated sheet.

An electrode assembly accommodated in a battery case serves as a power generation device capable of charging and discharging electric power, and has a structure in which a separator is disposed between a positive electrode and a negative electrode. Electrode assemblies are classified into jelly-roll types in which a separator is interposed between and wound together with a positive electrode and a negative electrode each having the shape of a long sheet with an active material coated thereon, stack types in which multiple positive electrodes and negative electrodes having a predetermined size are stacked in sequence while being separated by a separator, and stack-folding types in which a unit cell, such as a full cell configured with an electrode having different polarities on both surfaces thereof (e.g., positive electrode-separator-negative electrode) or a bi-cell configured with an electrode having the same polarity on both surfaces thereof (*e.g*., positive electrode-separator-negative electrode-separator-positive electrode), is disposed on a long sheet-shaped separator and wound together.

Since jelly-roll type electrode assemblies feature ease of manufacture and high energy per weight, the demand for cylindrical secondary batteries is rapidly increasing with the growth of Electric Vehicles (EVs) and Hybrid Electric Vehicles (HEVs) markets using jelly rolls as a power source.

### TECHNICAL PROBLEM

The present disclosure provides a cylindrical battery cell, in which a positive electrode and a negative electrode are formed on both surfaces of a composite current collector, respectively.

### TECHNICAL SOLUTION

A cylindrical battery cell according to the present disclosure includes: a battery case; and an electrode assembly including a first electrode and accommodated in the battery case. The first electrode includes a composite current collector including a positive electrode current collector and a negative electrode current collector facing the positive electrode current collector, a positive electrode active material layer formed on one surface of the positive electrode current collector to make up a positive electrode, and a negative electrode active material layer formed on one surface of the negative electrode current collector to make up a negative electrode.

The negative electrode current collector may be formed of a different material from the positive electrode current collector.

The composite current collector may further include an insulator disposed between the positive electrode current collector and the negative electrode current collector to prevent an electrical short circuit.

The electrode assembly may further include a second electrode having a same structure as the first electrode, and a separator disposed between the first electrode and the second electrode.

The separator may include at least one separator disposed on an upper side of the first electrode, between the first electrode and the second electrode, or on a lower side of the second electrode.

One surface of the insulator is in contact with an opposite surface of the positive electrode current collector, and an opposite surface of the insulator is in contact with an opposite surface of the negative electrode current collector.

The electrode assembly may have a jelly-roll type cylindrical shape to be wound in various forms.

The positive electrode current collector may include aluminum (Al), and the negative electrode current collector may include copper (Cu).

The positive electrode current collector, the negative electrode current collector, and the insulator may have a same size.

The length of the positive electrode current collector, the length of the negative electrode current collector, and the length of the insulator may be different from each other in a longitudinal direction perpendicular to a stacking direction.

The length of the insulator may be longer than the length of the positive electrode active material layer or the length of the negative electrode active material layer in a longitudinal direction perpendicular to a stacking direction.

The length of the negative electrode active material layer may be longer than the length of the positive electrode active material layer in a longitudinal direction perpendicular to a stacking direction.

The thickness of the positive electrode current collector may be different from the thickness of the negative electrode current collector in a height direction of stacking the current collectors.

The insulator may include a polymer material or a ceramic particle.

A battery pack according to the present disclosure may include at least one cylindrical battery cell described above.

An electric vehicle according to the present disclosure may include the battery pack described above.

### ADVANTAGEOUS EFFECTS

The present disclosure includes the composite current collector with the negative electrode and the positive electrode formed on both surfaces, respectively, so that dead volume may be reduced, and energy density may be improved, as compared to a method of winding the positive electrode and the negative electrode separately.

The present disclosure includes the composite current collector with the negative electrode and the positive electrode formed on both surfaces, respectively, so that the structure of the electrode assembly may be simplified, and diversity in cells may be achieved through various winding directions and shapes.

### BRIEF DESCRIPTION OF THE DRAWINGS

The drawings attached herewith are merely illustrative of embodiments of the present disclosure, and take on the role of further facilitating the understanding of the technical idea of the present disclosure along with the descriptions herein. Thus, the present disclosure should not be construed as being limited to those illustrated in the drawings.
FIG. 1 is a view illustrating a cylindrical battery cell of the present disclosure.
FIG. 2 is a view illustrating a longitudinal section of the cylindrical battery cell of the present disclosure.
FIG. 3 is a view illustrating an electrode assembly in a cylindrical battery cell including a composite current collector according to the present disclosure.
FIG. 4 is a view illustrating the electrode assembly in the cylindrical battery cell including the composite current collector before being wound, according to an embodiment of the present disclosure.
FIG. 5 is a vertical sectional view illustrating the electrode assembly in the cylindrical battery cell including the composite current collector before being wound, according to an embodiment of the present disclosure.
FIG. 6 is a vertical sectional view illustrating an electrode assembly in a cylindrical battery cell including a composite current collector before being wound, according to another embodiment of the present disclosure.
FIG. 7 is a view illustrating a battery pack of the present disclosure.
FIG. 8 is a view illustrating an electric vehicle equipped with a battery pack according to the present disclosure.

In some of the accompanying drawings, corresponding components will be denoted with the same reference numerals. The drawing figures presented are illustrated for simplicity and clarity and have not necessarily been drawn to scale. For example, the dimensions of some of the elements in the figures may be exaggerated relative to other elements to help to improve understanding of various embodiments. Also, common but well-understood elements that are useful or necessary in a commercially feasible embodiment are often not depicted in order to facilitate a less obstructed view of these various embodiments.

### DETAILED DESCRIPTION

The embodiments described herein and the configurations illustrated in the drawings are merely examples of the present disclosure, and various modifications may be made to substitute for the embodiments described herein and the drawings at the filing time of the application of the present disclosure.

The same reference numerals or symbols in the respective drawings of the present disclosure denote parts or components that perform substantially the same function. Further, terms used herein are adopted to describe the embodiments, and are not intended to limit and/or restrict the present disclosure. A singular term includes its plural unless clearly indicated otherwise by the context.

In the descriptions herein below, terms such as "include" and "have" are intended to designate the presence of features, numerals, steps, operations, components, parts, and combinations thereof described herein, but should not be interpreted to exclude the presence or possible addition of one or more other features, numerals, steps, operations, components, parts, and combinations thereof.

Terms with ordinal numbers such as "first," "second" and so on may be used to describe various components, but should not be interpreted as limiting the components. The terms are used solely for the purpose of discriminating a component from others.

For example, without departing from the scope of the present disclosure, a first component may be referred to as a second component, and similarly, a second component may be referred to as a first component.

The term "and/or" includes a combination of multiple related described items or any one of multiple related described items.

As used herein below, the terms "front," "rear," "an upper side," and "a lower side" are defined based on the drawings, and the shape and position of each component are not limited by the terms.

The energy density of jelly rolls in presently mass-produced cylindrical secondary batteries has reached its maximum level, and in order to reduce dead volume per unit volume, it is necessary to simplify the design of electrodes thereby fabricating dense jelly rolls, or diversify the winding method thereby improving the cell performance.

Lithium secondary batteries use a unit electrode in which the same electrode is formed on both surfaces of a current collector, for example, a unit electrode in which a negative electrode is formed on both surfaces of a copper current collector, or a positive electrode is formed on both surfaces of an aluminum current collector.

The unit electrode in which the negative electrode is formed on both surfaces of the copper current collector, and the unit electrode in which the positive electrode is formed on both surfaces of the aluminum current collector, are stacked in an alternating manner with a separator interposed therebetween, to fabricate an electrode assembly.

In order to connect the two types of unit electrodes, for example, a tab of the aluminum current collector and a tab of the copper current collector need to be welded to a positive electrode lead tap and a negative electrode lead tab of a battery, respectively, and therefore, an additional welding process is required.

When lithium secondary batteries are manufactured by the method above, the tabs for connecting the unit electrodes may be formed, which increases the weight and volume of batteries, making it difficult to achieve the miniaturization and the weight reduction of batteries. Further, welding defects may occur in the additional welding process, resulting in degradation of battery performance.

In consideration of the points above, the present disclosure provides a secondary battery structure, which includes a composite current collector with the negative electrode and the positive electrode formed on both surfaces, respectively, thereby reducing the dead volume and improving the energy density, as compared to the method of winding the positive electrode and the negative electrode separately.

Hereinafter, embodiments according to the present disclosure will be described with reference to the accompanying drawings.

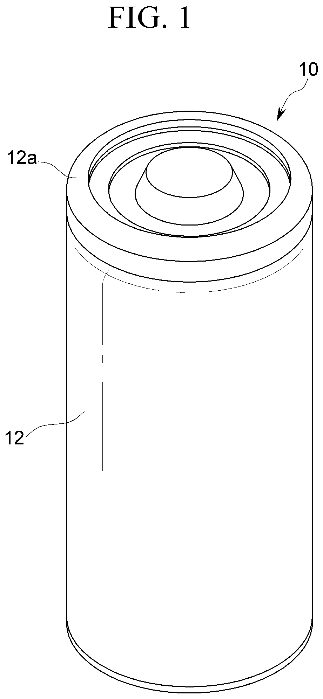

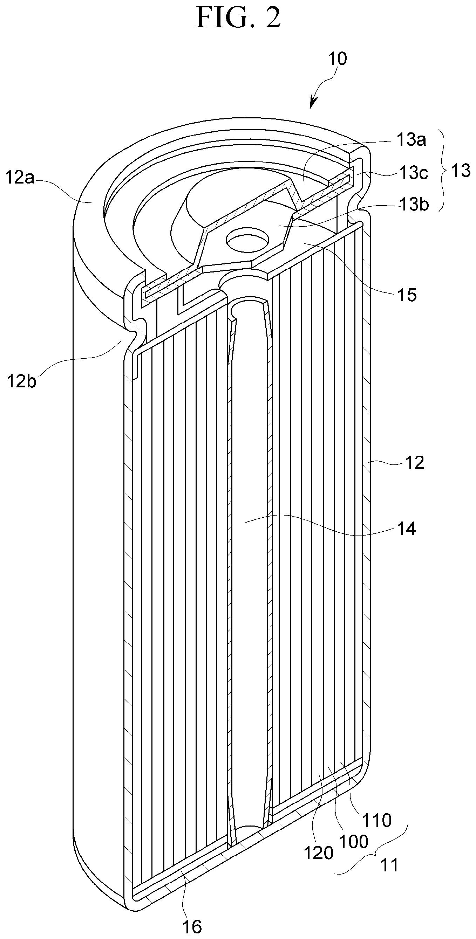

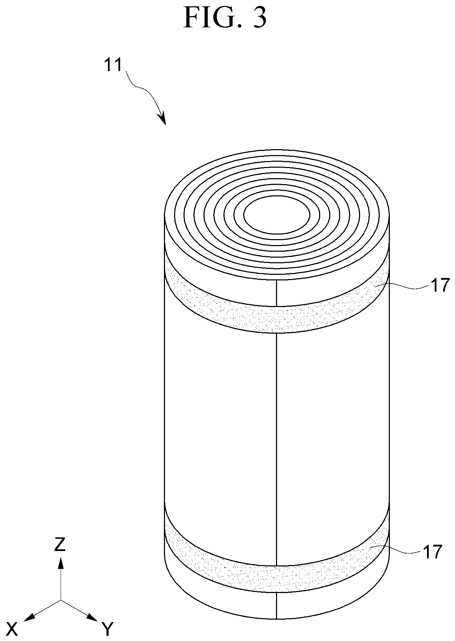

FIG. 1 is a view illustrating a cylindrical battery cell of the present disclosure. FIG. 2 is a view illustrating a longitudinal section of the cylindrical battery cell of the present disclosure. FIG. 3 is a view illustrating an electrode assembly in the cylindrical battery cell including a composite current collector according to the present disclosure.

A cylindrical battery cell 10 including a composite current collector according to the present disclosure may be formed in a cylindrical shape in which an electrode assembly 11 is accommodated in can of a cylindrical shape. The cylindrical battery cell 10 may include the electrode assembly 11 in a jelly-roll form and a battery case 12 for accommodating the electrode assembly 11.

An upper insulating member 15 may be disposed on the upper end of the electrode assembly 11, and a lower insulating member 16 may be disposed on the lower end of the electrode assembly 11.

The electrode assembly 11 may have a jelly-roll shaped structure in which a first electrode 110 and a separator 100, disposed on an upper side or a lower side of the first electrode 110, are wound together, and a center pin 14 may be inserted into the center thereof.

The cylindrical battery cell 10 may be fabricated by accommodating the electrode assembly 11 in the battery case 12, injecting an electrolyte into the battery case 12, and then, coupling a cap assembly 13 to the top of the battery case 12.

The battery case 12 has a cylindrical shape, and the jelly roll-shaped electrode assembly 11 is accommodated in the cylindrical battery case 12 to implement a cylindrical secondary battery.

The battery case 12 may include a beading portion 12b and a crimping portion 12a. The beading portion 12b is provided for the stable coupling of the cap assembly 13, and may be formed in the upper portion of the outer peripheral surface of the battery case 12 along the circumferential direction to be recessed from the outer peripheral surface of the battery case 12 toward the center of the electrode assembly 11. The beading portion 12b may prevent the movement of the electrode assembly 11.

The crimping portion 12a may be disposed on the top of the beading portion 12b, and formed to surround the edge portion of the cap assembly 13 along the circumferential direction. The crimping portion 12a may achieve the stable coupling of the cap assembly 13.

The cap assembly 13 may include a top cap 13a that makes up an electrode terminal, a cap plate 13b, and a gasket 13c for air-tight sealing. The gasket 13c may be mounted on the upper inner surface of the crimping portion 12a and the beading portion 12b, to enhance the sealing force between the cap assembly 13 and the battery case 12.

The center pin 14 may generally include a metal material to provide a predetermined strength, and have a cylindrical structure formed by bending a plate into a cylindrical shape. The center pin 14 may fix and support the electrode assembly 11, in addition to exhibiting self-heating, and function as a channel to release a gas generated by an internal reaction during the charge/discharge and the operation of the battery cell.

The electrolyte injected into the battery case 12 may be a lithium salt-containing non-aqueous electrolyte, which may include a non-aqueous electrolyte and a lithium salt. The non-aqueous electrolyte may include, for example, a non-aqueous organic solvent, an organic solid electrolyte, and an inorganic solid electrolyte. However, the present disclosure is not limited thereto.

The electrode assembly 11 may include the first electrode 110 having a long sheet shape and the separator 100 disposed on the upper or lower side of the first electrode 110. In the cylindrical battery cell 10 including the composite current collector according to the present disclosure, the first electrode 110 is provided as a single electrode configured with both the positive electrode and the negative electrode, so that the electrode assembly 11 may be configured with only the first electrode 110 as a single electrode.

The electrode assembly 11 according to the present disclosure may include a second electrode 120 having the same structure as the first electrode 110. The electrode assembly 11 may include a plurality of electrodes including the first electrode 110 and the second electrode 120.

The separator 100 may be disposed between the first electrode 110 and the second electrode 120. A plurality of separators 100 may be provided to be disposed on the upper or lower side of the first electrode 110, and between the first electrode 110 and the second electrode 120.

When the separator 100 is disposed on the upper or lower side of the first electrode 110, and the first electrode 110 and the second electrode 120 are wound together in the jelly-roll form, the separator 100 may physically separate the positive electrode included in the first electrode 110 and the negative electrode included in the second electrode 120, thereby preventing electrical short circuits between the positive electrode and the negative electrode. Alternatively, the separator 100 may physically separate the negative electrode included in the first electrode 110 and the positive electrode included in the second electrode 120, thereby preventing electrical short circuits between the negative electrode and the positive electrode.

For example, while FIG. 2 illustrates a case where the electrode assembly 11 according to the present disclosure includes both the first electrode 110 and the second electrode 120, the present disclosure is not limited thereto, and the electrode assembly 11 according to the present disclosure may be configured with only the first electrode 110 as a single electrode.

The electrode assembly 11 according to the present disclosure may include a plurality of electrodes including the first electrode 110 and the second electrode 120, and may include a plurality of separators 100 disposed on the upper or lower side of the first electrode 110 and on the upper or lower side of the second electrode 120.

In order to prevent the contact between the first electrode 110 and the second electrode 120 when they are wound in the jelly-roll form, the separator 100 may be additionally disposed under the second electrode 120.

A sealing tape 17 may be disposed on the outer peripheral surface of the electrode assembly 11. The sealing tape 17 may be disposed on each of the upper and lower portions of the outer peripheral surface of the electrode assembly 11. The sealing tape 17 may be disposed on the outer peripheral surface of the jelly roll-shaped electrode assembly 11 along the circumferential direction, and attached to the outer peripheral surface of the electrode assembly 11 by an adhesive layer formed on the underside of the sealing tape 17.

While an embodiment of the present disclosure has been described assuming the cylindrical battery cell, the present disclosure is not limited thereto, and may be applied to other types of battery cells such as prismatic or pouch type battery cells.

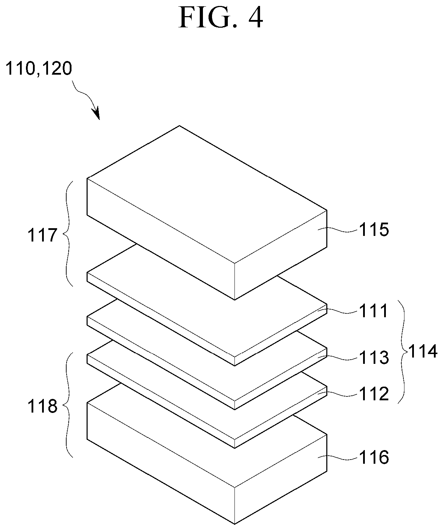

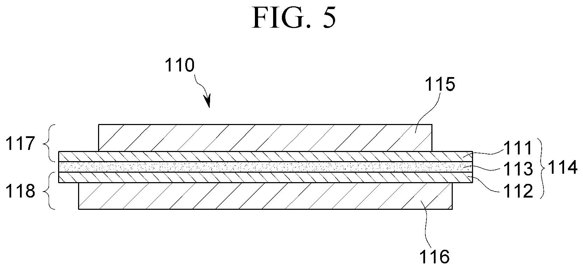

FIG. 4 is a view illustrating the electrode assembly in the cylindrical battery cell including the composite current collector before being wound, according to an embodiment of the present disclosure. FIG. 5 is a vertical sectional view illustrating the electrode assembly in the cylindrical battery cell including the composite current collector before being wound, according to an embodiment of the present disclosure.

Referring to FIGS. 4 and 5, the electrode assembly 11 (see, *e.g.,* FIG. 2) may include the first electrode 110 and the second electrode 120. The first electrode 110 and the second electrode 120 may be the same. However, the present disclosure is not limited thereto. Hereinafter, descriptions will be made based on the first electrode 110 including a composite current collector 114 according to an embodiment of the present disclosure.

The first electrode 110 may include the composite current collector 114, a positive electrode active material layer 115 formed on one surface of the composite current collector 114, and a negative electrode active material layer 116 formed on the other surface of the composite current collector 114.

The positive electrode active material layer 115 and the negative electrode active material layer 116 may be formed to face each other with the composite current collector 114 interposed therebetween. According to an embodiment, in the cylindrical battery cell 10 (see, *e.g.,* FIG. 2) including the composite current collector 114, a positive electrode 117 and a negative electrode 118 may be formed together in a single electrode, so that the design of electrodes may be simplified, and the jelly-roll cylindrical battery cell 10 (see, *e.g.,* FIG. 2) may be configured variously by applying various winding directions and shapes.

As a result, the electrochemical reaction area may be maximized, and the output characteristics of the battery may be enhanced. Further, the cylindrical battery cell 10 (see, *e.g.,* FIG. 2) may be manufactured in various sizes and shapes, so that the range of applications may be broadened, and customized batteries for specific applications may be designed.

Referring to FIG. 5, the first electrode 110 may include the positive electrode 117 and the negative electrode 118. The positive electrode 117 may include a positive electrode current collector 111 and a positive electrode active material layer 115, and the negative electrode 118 may include a negative electrode current collector 112 and a negative electrode active material layer 116.

An insulator 113 may be disposed between the positive electrode current collector 111 and the negative electrode current collector 112 to prevent electrical short circuits.

The composite current collector 114 according to an embodiment of the present disclosure may include the positive electrode current collector 111, the negative electrode current collector 112, and the insulator 113. The positive electrode current collector 111 and the negative electrode current collector 112 may be formed of different materials.

The positive electrode current collector 111 may include aluminum (Al) to form the positive electrode 117 together with the positive electrode active material layer 115, and the negative electrode current collector 112 may include copper (Cu) to form the negative electrode 118 together with the negative electrode active material layer 116. However, the present disclosure is not limited thereto.

The positive electrode active material layer 115 may be formed on one surface of the positive electrode current collector 111 to make up the positive electrode 117, and the negative electrode active material layer 116 may be formed on one surface of the negative electrode current collector 112 to make up the negative electrode 118. The other surface of the positive electrode current collector 111 and the other surface of the negative electrode current collector 112 may be disposed to face each other. The positive electrode active material layer 115 may be formed by being coated on the positive electrode current collector 111, and the negative electrode active material layer 116 may be formed by being coated on the negative electrode current collector 112.

The positive electrode active material layer 115 may have a nanostructure, which may improve the electrical conductivity and increase the surface area of the positive electrode 117, thereby improving the electrochemical reaction rate. The negative electrode active material layer 116 may include graphite, and may undergo a surface modification process to maximize its reactivity with lithium ions.

The composite current collector 114 according to the present disclosure includes the insulator 113, which may prevent electrical short circuits between the positive electrode 117 and the negative electrode 118. The insulator 113 is disposed between the positive electrode current collector 111 and the negative electrode current collector 112, so that the composite current collector 114 including the positive electrode current collector 111 and the negative electrode current collector 112 may be implemented, and the positive electrode 117 and the negative electrode 118 may be formed together in the single first electrode 110. The insulator 113 may be formed of a different material from the separator 100 (see, *e.g.,* FIG. 2).

One surface of the insulator 113 may face the other surface of the positive electrode current collector 111, and the other surface of the insulator 113 may face the other surface of the negative electrode current collector 112. One surface of the insulator 113 may be in contact with the other surface of the positive electrode current collector 111, and the other surface of the insulator 113 may be in contact with the other surface of the negative electrode current collector 112.

In the first electrode 110 according to an embodiment of the present disclosure, as illustrated in FIG. 5, the positive electrode active material layer 115 is formed on the positive electrode current collector 111, and the negative electrode active material layer 116 is formed under the negative electrode current collector 112. However, the present disclosure is not limited thereto. For example, in the first electrode 110 according to another embodiment of the present disclosure, the positive electrode active material layer 115 may be formed under the positive electrode current collector 111, and the negative electrode active material layer 116 may be formed on the negative electrode current collector 112. In this case, one surface of the insulator 113 may face the other surface of the positive electrode active material layer 115, and the other surface of the insulator 113 may face the other surface of the negative electrode active material layer 116. Alternatively, in the first electrode 110 according to yet another embodiment of the present disclosure, the positive electrode active material layer 115 and the negative electrode active material layer 116 may be formed on both surfaces of each of the positive electrode current collector 111 and the negative electrode current collector 112.

According to an embodiment, the insulator 113 may include a polymer material or ceramic particles. As a result, the thermal stability and the electrical insulation may be achieved, and the ceramic particles may prevent electrical short circuits between the positive electrode 117 and the negative electrode 118 and maintain stable characteristics even in high-temperature environments. However, the present disclosure is not limited thereto.

The size of the positive electrode current collector 111 may be the same as the size of the negative electrode current collector 112. The length of the positive electrode current collector 111 may be equal to the length of the negative electrode current collector 112 in the longitudinal direction perpendicular to the stacking direction. The thickness of the positive electrode current collector 111 may be equal to the thickness of the negative electrode current collector 112 in the height direction of stacking the current collectors. The area of one surface of the positive electrode current collector 111 may be equal to the area of one surface of the negative electrode current collector 112. However, the present disclosure is not limited thereto.

According to an embodiment, the size of the positive electrode current collector 111 may be the same as the size of the insulator 113. The length of the positive electrode current collector 111 may be equal to the length of the insulator 113 in the longitudinal direction perpendicular to the stacking direction. The thickness of the positive electrode current collector 111 may be equal to the thickness of the insulator 113 in the height direction of stacking the current collectors. The area of one surface of the positive electrode current collector 111 may be equal to the area of one surface of the insulator 113. However, the present disclosure is not limited thereto.

According to an embodiment, the size of the negative electrode current collector 112 may be the same as the size of the insulator 113. The length of the negative electrode current collector 112 may be equal to the length of the insulator 113 in the longitudinal direction perpendicular to the stacking direction. The thickness of the negative electrode current collector 112 may be equal to the thickness of the insulator 113 in the height direction of stacking the current collectors. The area of one surface of the negative electrode current collector 112 may be equal to the area of one surface of the insulator 113. However, the present disclosure is not limited thereto.

According to an embodiment, the size of the positive electrode current collector 111, the size of the negative electrode current collector 112, and the size of the insulator 113 may be the same. The length of the positive electrode current collector 111, the length of the negative electrode current collector 112, and the length of the insulator 113 may be equal to each other in the longitudinal direction perpendicular to the stacking direction. The thickness of the positive electrode current collector 111, the thickness of the negative electrode current collector 112, and the thickness of the insulator 113 may be equal to each other in the height direction of stacking the current collectors. The area of one surface of the positive electrode current collector 111, the area of one surface of the negative electrode current collector 112, and the area of one surface of the insulator 113 may be equal to each other. However, the present disclosure is not limited thereto.

According to an embodiment, the length of the insulator 113 may be longer than the length of the positive electrode active material layer 115 or the length of the negative electrode active material layer 116 in the longitudinal direction perpendicular to the stacking direction. The length of the positive electrode current collector 111 may be longer than the length of the positive electrode active material layer 115 or the length of the negative electrode active material layer 116 in the longitudinal direction perpendicular to the stacking direction. The length of the negative electrode current collector 112 may be longer than the length of the positive electrode active material layer 115 or the length of the negative electrode active material layer 116 in the longitudinal direction perpendicular to the stacking direction. However, the present disclosure is not limited thereto.

According to an embodiment, the length of the negative electrode active material layer 116 may be longer than the length of the positive electrode active material layer 115 in the longitudinal direction perpendicular to the stacking direction. However, the present disclosure is not limited thereto.

In an embodiment, the electrode assembly 11 (see, *e.g.,* FIG. 2) including the composite current collector 114 according to the present disclosure may have the cylindrical shape. The electrode assembly 11 (see, *e.g.,* FIG. 2) including the composite current concentrator 114 may be formed in the jelly-roll shape that may be wound in various forms. Therefore, the first electrode 110, which is a single electrode configured with the positive electrode 117 and the negative electrode 118, may be applied to the jelly-roll cylindrical battery cell 10 (see, *e.g.,* FIG. 2).

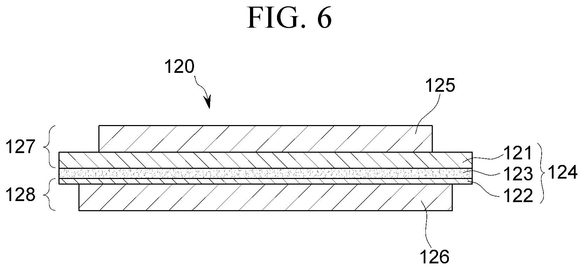

FIG. 6 is a vertical sectional view illustrating an electrode assembly in a cylindrical battery cell including a composite current collector before being wound, according to another embodiment of the present disclosure.

Referring to FIG. 6, the electrode assembly 11 (see, *e.g.,* FIG. 2) may include the second electrode 120. The first electrode 110 and the second electrode 120 may be different from each other. The first electrode 110 and the second electrode 120 may include different materials. Hereinafter, descriptions will be made based on the second electrode 120 including a composite current collector 124 according to another embodiment of the present disclosure.

The second electrode 120 may include the composite current collector 124, a positive electrode active material layer 125 formed on one surface of the composite current collector 124, and a negative electrode active material layer 126 formed on the other surface of the composite current collector 124.

The positive electrode active material layer 125 and the negative electrode active material layer 126 may be formed to face each other with the composite current collector 124 interposed therebetween. For example, in the cylindrical battery cell 10 (see, *e.g.,* FIG. 2) including the composite current collector 124 according to the present disclosure, a positive electrode 127 and a negative electrode 128 may be formed together in a single electrode. As a result, the design of electrodes may be simplified, and the jelly-roll cylindrical battery cell may be configured variously by applying various winding directions and shapes.

The second electrode 120 may include the positive electrode 127 and the negative electrode 128. The positive electrode 127 may include a positive electrode current collector 121 and the positive electrode active material layer 125, and the negative electrode 128 may include a negative electrode current collector 122 and the negative electrode active material layer 126.

The composite current collector 124 according to the present disclosure may include the positive electrode current collector 121 and the negative electrode current collector 122. The positive electrode current collector 121 and the negative electrode current collector 122 may be formed of different materials.

The positive electrode current collector 121 may include aluminum (Al) to form the positive electrode 127 together with the positive electrode active material layer 125, and the negative electrode current collector 122 may include copper (Cu) to form the negative electrode 128 together with the negative electrode active material layer 126. However, the present disclosure is not limited thereto.

The positive electrode active material layer 125 may be formed by applying an electrode active material to one surface of the positive electrode current collector 121. The negative electrode active material layer 126 may be formed by applying an electrode active material to one surface of the negative electrode current collector 122.

The positive electrode active material layer 125 may be formed on one surface of the positive electrode current collector 121 to make up the positive electrode 127, and the negative electrode active material layer 126 may be formed on one surface of the negative electrode current collector 122 to make up the negative electrode 128. The other surface of the positive electrode current collector 121 and the other surface of the negative electrode current collector 122 may be disposed to face each other.

The composite current collector 124 may include an insulator 123 disposed between the positive electrode current collector 121 and the negative electrode current collector 122. The composite current collector 124 according to the present disclosure includes the insulator 123, which may prevent electrical short circuits between the positive electrode 127 and the negative electrode 128. As a result, the composite current collector 124 including the positive electrode current collector 121 and the negative electrode current collector 122 may be implemented, and the positive electrode 127 and the negative electrode 128 may be formed together in the single second electrode 120.

One surface of the insulator 123 may face the other surface of the positive electrode current collector 121, and the other surface of the insulator 123 may face the other surface of the negative electrode current collector 122. One surface of the insulator 123 may be in contact with the other surface of the positive electrode current collector 121, and the other surface of the insulator 123 may be in contact with the other surface of the negative electrode current collector 122.

In the second electrode 120 according to an embodiment of the present disclosure, as illustrated in FIG. 6, the positive electrode active material layer 125 is formed on the positive electrode current collector 121, and the negative electrode active material layer 126 is formed under the negative electrode current collector 122. However, the present disclosure is not limited thereto. For example, in the first electrode 120 according to another embodiment of the present disclosure, the positive electrode active material layer 125 may be formed under the positive electrode current collector 121, and the negative electrode active material layer 126 may be formed on the negative electrode current collector 122. In this case, one surface of the insulator 123 may face the other surface of the positive electrode active material layer 125, and the other surface of the insulator 123 may face the other surface of the negative electrode active material layer 126. Alternatively, in the first electrode 120 according to yet another embodiment of the present disclosure, the positive electrode active material layer 125 and the negative electrode active material layer 126 may be formed on both surfaces of each of the positive electrode current collector 121 and the negative electrode current collector 122.

According to an embodiment, the insulator 123 may include a polymer material or ceramic particles. As a result, the thermal stability and the electrical insulation may be achieved, and the ceramic particles may prevent electrical short circuits between the positive electrode 127 and the negative electrode 128 and maintain stable characteristics even in high-temperature environments. However, the present disclosure is not limited thereto.

According to an embodiment, the size of the positive electrode current collector 121 may be different from the size of the negative electrode current collector 122. The thickness of the positive electrode current collector 121 may be different from the thickness of the negative electrode current collector 122 in the height direction of stacking the current collectors. The length of the positive electrode current collector 121 may be different from the length of the negative electrode current collector 122 in the longitudinal direction perpendicular to the stacking direction. The area of one surface of the positive electrode current collector 121 may be different from the area of one surface of the negative electrode current collector 122.

According to an embodiment, the size of the positive electrode current collector 121 may be different from the size of the insulator 123. The thickness of the positive electrode current collector 121 may be different from the thickness of the insulator 123 in the height direction of stacking the current collectors. The length of the positive electrode current collector 121 may be different from the length of the insulator 123 in the longitudinal direction perpendicular to the stacking direction. The area of one surface of the positive electrode current collector 121 may be different from the area of one surface of the insulator 123.

According to an embodiment, the size of the negative electrode current collector 122 may be different from the size of the insulator 123. The thickness of the negative electrode current collector 122 may be different from the thickness of the insulator 123 in the height direction of stacking the current collectors. The length of the negative electrode current collector 122 may be different from the length of the insulator 123 in the longitudinal direction perpendicular to the stacking direction. The area of one surface of the negative electrode current collector 122 may be different from the area of one surface of the insulator 123.

According to an embodiment, the size of the positive electrode current collector 121, the size of the negative electrode current collector 122, and the size of the insulator 123 may be different from each other. The thickness of the positive electrode current collector 121, the thickness of the negative electrode current collector 122, and the thickness of the insulator 123 may be different from each other in the height direction of stacking the current collecctors. The length of the positive electrode current collector 121, the length of the negative electrode current collector 122, and the length of the insulator 123 may be different from each other in the longitudinal direction perpendicular to the stacking direction. The area of one surface of the positive electrode current collector 121, the area of one surface of the negative electrode current collector 122, and the area of one surface of the insulator 123 may be different from each other.

For example, the sizes and the lengths of the positive electrode current collector 121, the negative electrode current collector 122, and the insulator 123 may be adjusted according to the design of the cylindrical battery cell 10 (see, *e.g.,* FIG. 2). For example, the length of the insulator 123 may be designed to be longer than the lengths of the positive electrode active material layer 125 and the negative electrode active material layer 126 in the longitudinal direction perpendicular to the stacking direction, so that the insulation may be enhanced, and the contact between the positive electrode 127 and the negative electrode 128 is prevented, thereby improving the safety and performance of the battery.

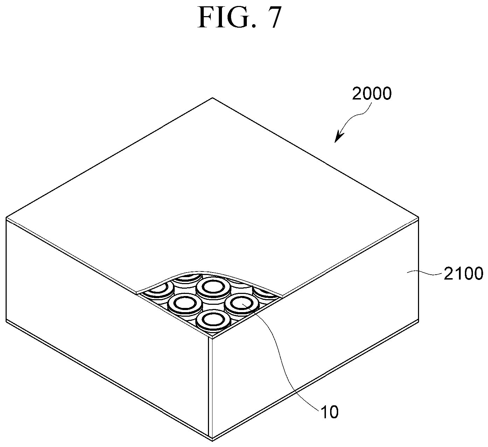

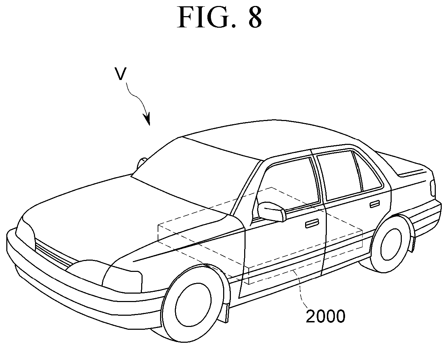

FIG. 7 is a view illustrating a battery pack of the present disclosure. FIG. 8 is a view illustrating an electric vehicle equipped with the battery pack according to the present disclosure.

Referring to FIGS. 7 and 8, a plurality of cylindrical battery cells 10 may be accommodated in a pack case 2100 to form a battery pack 2000. The battery pack 2000 may further include various control and protection systems such as a battery management system (BMS).

The battery pack 2000 may be applied to various devices. For example, the battery pack 2000 may be applied to transportation vehicles such as electric bicycles, electric vehicles, and hybrid vehicles, or energy storage systems (ESS). However, without being limited thereto, the battery pack 2000 may be applied to various devices that use secondary batteries.

In an electric vehicle V, the wheels may be driven by a motor receiving power from the battery pack 2000, allowing the electric vehicle to drive.

While the technical idea of the present disclosure has been described with reference to specific embodiments, the scope of the present disclosure is not limited to the embodiments.

Various modifications and changes may be made to the embodiments of the present disclosure by those skilled in the art within the scope that does not depart from the technical idea and gist of the present disclose set forth in the claims, and are also included in the scope of the present disclosure.

## Claims

1. A cylindrical battery cell comprising:
a battery case; and
an electrode assembly including a first electrode and accommodated in the battery case,
wherein the first electrode includes
a composite current collector including a positive electrode current collector and a negative electrode current collector facing the positive electrode current collector,
a positive electrode active material layer formed on one surface of the positive electrode current collector to make up a positive electrode, and
a negative electrode active material layer formed on one surface of the negative electrode current collector to make up a negative electrode.

2. The cylindrical battery cell according to claim 1, wherein the negative electrode current collector is formed of a different material from the positive electrode current collector.

3. The cylindrical battery cell according to claim 1, wherein the composite current collector further includes an insulator disposed between the positive electrode current collector and the negative electrode current collector to prevent an electrical short circuit.

4. The cylindrical battery cell according to claim 1, wherein the electrode assembly further includes
a second electrode having a same structure as the first electrode, and
a separator disposed between the first electrode and the second electrode.

5. The cylindrical battery cell according to claim 4, wherein the separator includes at least one separator disposed on an upper side of the first electrode, between the first electrode and the second electrode, or on a lower side of the second electrode.

6. The cylindrical battery cell according to claim 3, wherein one surface of the insulator is in contact with an opposite surface of the positive electrode current collector, and
an opposite surface of the insulator is in contact with an opposite surface of the negative electrode current collector.

7. The cylindrical battery cell according to claim 1, wherein the electrode assembly has a jelly-roll type cylindrical shape to be wound in various forms.

8. The cylindrical battery cell according to claim 1, wherein the positive electrode current collector includes aluminum (Al), and
the negative electrode current collector includes copper (Cu).

9. The cylindrical battery cell according to claim 3, wherein the positive electrode current collector, the negative electrode current collector, and the insulator have a same size.

10. The cylindrical battery cell according to claim 3, wherein a length of the positive electrode current collector, a length of the negative electrode current collector, and a length of the insulator are different from each other in a longitudinal direction perpendicular to a stacking direction.

11. The cylindrical battery cell according to claim 3, wherein a length of the insulator is longer than a length of the positive electrode active material layer or a length of the negative electrode active material layer in a longitudinal direction perpendicular to a stacking direction.

12. The cylindrical battery cell according to claim 1, wherein a length of the negative electrode active material layer is longer than a length of the positive electrode active material layer in a longitudinal direction perpendicular to a stacking direction.

13. The cylindrical battery cell according to claim 1, wherein a thickness of the positive electrode current collector is different from a thickness of the negative electrode current collector in a height direction of stacking the current collectors.

14. The cylindrical battery cell according to claim 3, wherein the insulator includes a polymer material or a ceramic particle.

15. A battery pack comprising the cylindrical battery cell according to claim 1.
